# EUROPÄISCHE PATENTSCHRIFT

(11) **EP 0 615 093 B1**
(45) Veröffentlichungstag und Bekanntmachung des Hinweises auf die Patenterteilung: **17.09.1997**
(21) Anmeldenummer: 94102633.8
(22) Anmeldetag: 22.02.1994
(51) Int. Cl.: F17C 13/02, G01L 1/12, B63B 7/08, B63C 9/18

(54) **Indikator für Druckluftflaschen**
Indicator of a pressurised air bottle
Indicateur pour une bouteille d'air sous pression

(30) Priorität: 06.03.1993 DE 9303295 U
(43) Veröffentlichungstag der Anmeldung: 14.09.1994
(73) Patentinhaber: BERNHARDT APPARATEBAU GmbH u. Co., D-22880 Wedel (DE)
(72) Erfinder: Glasa, Stefan, D-22559 Hamburg (DE)
(74) Vertreter: Richter, Werdermann & Gerbaulet

(56) Entgegenhaltungen:
- FR-A- 1 258 750
- FR-A- 2 429 601
- FR-A- 2 555 290
- US-A- 4 023 415
- US-A- 5 027 740

## Beschreibung

Die Erfindung betrifft einen Indikator an einer Druckluftflasche od. dgl. zur Anzeige des Unterschreitens eines definierten Druckes in der Druckluftflasche, wobei mindestens ein bestimmter Teil der Wandung der Druckluftflasche derart ausgelegt ist, daß dieser flexibel ist, so daß dieser Teil der Wandung bei unterschiedlichen Drücken bestimmten unterschiedlichen Verformungen unterliegt, und ein Indikatorelement vorgesehen ist, das derart mit dem flexiblen Teil der Wandung der Druckluftflasche verbunden ist, daß es abhängig von der Verformung des flexiblen Teils unterschiedliche Stellungen einnimmt.

Für in definierbaren Situationen automatisch aufblasbare Gegenstände, wie z.B. Schwimmwesten oder Rettungsflöße, sind auswechselbare Druckgasflaschen zum Aufblasen vorgesehen. Bei derartigen Druckgasflaschen vergeht vom Einschrauben in entsprechende Vorrichtungen bis zum Einsatz mitunter sehr viel Zeit, wobei dann der Druckflasche normalerweise nicht anzusehen ist, ob noch der notwendige Befüllungsgrad gegeben ist.

Es wurden daher Manometer vorgesehen, die in Gewindebohrungen der Druckgasflasche eingeschraubt werden und ständig den herrschenden Druck anzeigen. Hierbei hat sich jedoch als nachteilhaft erwiesen, daß die Dichtungen oftmals zu Undichtigkeiten neigen, da z.B. durch ein zu hohes Drehmoment beim Einschrauben des Manometers die Dichtung zerdrückt werden. Ebenso ist es nachteilhaft, daß oftmals die Gewinde von Manometer und Druckgasflasche miteinander sich im Laufe der Zeit verschweißen, so daß eine erneute Befüllung bzw. Instandsetzung der Druckgasflasche nicht mehr möglich ist.

Bekannt ist auch bereits eine Warneinrichtung zur Anzeige einer Druckerhöhung in einem Behälter. Der dortige Behältermantel weist eine durch eine elastisch verformbare Abdeckung gasdicht und druckfest abgeschlossene Öffnung auf, wobei an der Abdeckung ein Stößel zu einer Signalauslösung anliegt, der mit einer entsprechenden Mechanik angreift derart, daß eine Sirene, deren Betätigung durch Preßluft mittels eines Kolbens vom Stößel gesteuer wird, auslösbar ist. Hierbei ist jedoch nicht vorgesehen, daß außer im Alarmfall von außen sichtbar ist, ob der Druck dem gewünschten Druckstatus entspricht (DE 30 35 766 C2).

Aus der FR-PS 1 258 750 ist ein Feuerlöscher bekannt, der einen zylindrischen Behälter aufweist, dessen Enden kuppelförmig sind. Um dem Benutzer prüfbar zu machen, ob der Innendruck aufrechterhalten wird, ist eine entsprechende Einrichtung vorgesehen, die aus einer Scheibe aus Federstahl besteht, die über einen Flansch mit der Außenwand des Behälters im Bereich einer Behälteröffnung verbunden ist.

Die Scheibe ist gewölbt und elastisch und kann aus ihrer konvexen in eine konkave Position wechseln. Sie ist ausreichend dünn, so daß sie per Hand nach innen zurückgedrückt werden kann und in dieser Lage bleibt, wobei die konkave Seite nach außen zeigt, wenn kein Druck im Innern des Behälters anliegt. Jedoch ändert sie ihre Form nach außen, wenn der Innendruck ansteigt. Diese Position ist ihre Normalposition. Wenn der Behälter gefüllt ist und ein entsprechender Innendruck anliegt, kann die Scheibe nicht mehr durch normalen Handdruck nach unten gedrückt werden. Wenn der Innendruck niedriger ist als normal, kann die Scheibe nach innen gedrückt werden, sobald man aber losläßt, nimmt sie, verursacht durch den Innendruck, ihre normale, nach außen gerichtete Position wieder ein. Es kann auch vorkommen, daß der Behälter während des Befüllens einem außerordentlich hohen Innendruck ausgesetzt wird, oder daß der Innendruck aus beliebigen Gründen außerordentlich ansteigt. Die erfindungsgemäße Anzeige ist in der Lage, diesen Überdruck anzuzeigen. Sie ist, wenn der Innendruck stark ansteigt, kuppelförmig deformiert. Die Verformung ist aufgrund der dauerhaften Metallverformung irreversibel. Wenn also ein großer Innendruck entsteht, zeigt die Anzeige diesen Zustand permanent an. Dieser Umstand ist ein wichtiger Vorteil der Erfindung, da ein Behälter, der einmal einem großen Druck ausgesetzt gewesen ist, ausgesondert werden muß. Wenn die Kuppelform auf diese Art entstanden ist, nimmt die Scheibe bei großem Innendruck ihre Idealform ein, folglich entsteht dort kein Riß, das dickere Material des Behälters reißt vorher. Die Vorrichtung dient also dazu, einen einmal aufgetretenen Überdruck dauerhaft anzuzeigen, wobei auch ein Reißen des Behälters in Kauf genommen wird.

Die FR-PS 25 55 290 zeigt eine Vorrichtung zur Anzeige des Ladezustandes einer Gasversorgungseinrichtung. Hierbei ist ein Anzeigeelement schwenkbar in einen Körper eingebaut, der eine durch den Gasdruck der Gasversorgungseinrichtung beaufschlagbare flexible Membran aufweist, die sich unter Gasdruck verformt und mit der Anzeige zusammenwirkt. Dabei stützt sich eine am Anzeigeelement angeordnete Nase auf einer Platte ab, die mit der Membran verbunden ist, so daß das Anzeigeelement abhängig von der Verformung der Membran bewegt wird.

Es ist daher Aufgabe der vorliegenden Erfindung, einen Indikator für Druckluftflaschen o. dgl. zur Anzeige des Unterschreitens eines definierten Druckes in der Druckluftflasche zu schaffen, der gewährleistet, daß in einfachster Form erkennbar ist, ob eine Druckluftflasche den notwendigen Druck aufweist und der verhindert, daß durch die Druckmessung eine Fehlerquelle entsteht, die zu Druckabfällen führen kann, wobei gleichzeitig höchste Berstsicherheit erreichbar sein soll.

Zur Lösung dieser Aufgabe wird ein Indikator der eingangs genannten Art vorgeschlagen, wie er durch die kennzeichnenden Merkmale des Anspruchs 1 angegeben ist.

Dazu ist vorgesehen, eine oder mehrere bestimmte Teile der druckbeaufschlagten Wandung der Druckluftflasche mit einer derart geringen Wandstärke zu fertigen, so daß diese unter Druck bzw. ohne Druckbelastungen bestimmten Verformungen unterliegt, die zur Betätigung eines Indikators heranziehbar sind bzw. zur Druckmessung dienen. Der Druck bei derartigen Druckluftflaschen beträgt 60-200 bar, so daß die dünnwandigen Teile der Druckluftflasche problemlos in gewünschter Weise verformt werden können.

Dadurch wird sichergestellt, daß die Druckluftflasche durch die Druckmessung nicht beschädigt wird und auch nicht im Laufe der Zeit Druck verliert. Es ist vorgesehen, daß der Indikator ein Indikatorelement aufweist, das derart direkt oder indirekt mit dem flexiblen Teil der Wandung der Druckluftflasche verbunden ist, daß es abhängig von der Verformung des flexiblen Teils unterschiedliche Stellungen einnimmt.

Nach einer Ausgestaltung eines Indikators für Druckluftflaschen ist es vorgesehen, an der Druckluftflasche einen Gewindeanschluß für den Indikatormechanismus vorzusehen, wobei jedoch die Öffnung zum Innenraum der Druckluftflasche fest mit einer Metallfolie verschlossen ist, die an dem oberen Rand des Gewindes vorgesehen ist, so daß keinerlei Verbindung nach außen über diesem Gewindeanschluß besteht und die Metallfolie ein Teil der druckbeaufschlagten Wandung der Druckluftflasche bildet. Auf das Außengewinde ist eine Verschlußkappe geschraubt, in deren Inneren sich der Indikatormechanismus befindet. Oberhalb der Metallfolie ist die Verschlußkappe durchbohrt, wobei sich der Innendurchmesser der Durchgangsbohrung in zwei Stufen von innen nach außen verringert. Im breitesten Teil der Bohrung befindet sich ein zylindrischer Körper, der auf der Metallfolie aufliegt. Mit dem zylindrischen Körper fest verbunden ist ein weiterer zylindrischer Körper, der einen Durchmesser aufweist, der den Teil der Durchgangsbohrung mit dem kleinsten Durchmesserentspricht. Dieser zweite zylindrische Körper schließt bündig mit der Verschlußkappe im befüllten Zustand der Druckgasflasche ab. Im mittleren Teil der Durchgangsbohrung ist eine Spiralfeder eingelegt, die sich an der zweiten Stufe der Durchgangsbohrung und an dem ersten zylindrischen Körper abstützt. Auf dem zweiten zylindrischen Körper ist auf der Kreisfläche, die mit der Oberfläche der Verschlußkappe bündig abschließt, ein Indikatorplättchen aufgeklebt, das einen größeren Durchmesser aufweist als die Durchgangsbohrung. Im befüllten Zustand ist die Kreisfläche des zweiten zylindrischen Elements bündig mit der Verschlußkappe, im unbefüllten Zustand jedoch, senkt sich durch den Druck der Spiralfeder und den fehlenden Innendruck der Druckluftflasche auf das erste zylindrische Element die Metallfolie nach unten und damit das zweite zylindrische Element, und das Indikatorplättchen reißt ab, da es durch den Rand der Durchgangsbohrung in der Verschlußkappe nicht in die Verschlußkappe hineingezogen werden kann, so daß bei dessen Nichtvorhandensein der Hinweis darauf gegeben ist, daß der benötigte Druck nicht zur Verfügung steht.

Bei der Montage dieses Indikatorsystems stellt sich das Problem, daß im unbefüllten Zustand sich das Indikatorplättchen nicht auf das zweite zylindrische Elememnt aufkleben läßt. Im befüllten Zustand ist dies natürlich problemlos möglich. Es ist daher eine zweite Durchgangsbohrung im rechten Winkel zur ersten Durchgangsbohrung vorgesehen, die durch das erste zylindrische Element führt. Durch diese zweite Durchgangsbohrung ist ein Sicherungsstift führbar, der somit ein Anbringen des Indikatorplättchens ermöglicht. Eine weitere Möglichkeit besteht darin, das zweite zylindrische Element während des Befüllens mit einem starken Magneten zurückzuhalten. Ebenso ist natürlich die Möglichkeit gegeben, mit einem Mechanismus z.B. durch eine Entsperrvorrichtung den Indikatormechanismus bei Bedarf zu aktivieren.

Bei einer anderen Ausführungsform des Indikators für Druckluftflaschen ist vorgesehen, an der Druckluftflasche einen Gewindeanschluß für den Indikatormechanismus vorzusehen, wobei auch hier die Öffnung zum Innenraum der Druckluftflasche fest mit einer Metallfolie verschlossen ist, die an dem oberen Rand der Öffnung vorgesehen ist, so daß keinerlei Verbindung nach außen über diesen Gewindeanschluß besteht und die Metallfolie einen Teil der druckbeaufschlagten Wandung der Druckluftflasche bildet. Auf das Außengewinde der flaschenhalsartig ausgebildeten Öffnung der Druckluftflasche ist eine Verschlußkappe geschraubt, in deren Inneren sich der Indikatormechanismus befindet. Die Verschlußkappe weist eine Deckelfläche auf, in der mittig eine von innen nach außen zweistufig enger werdende Durchgangsbohrung ausgebildet ist, wobei in der breiteren Stufe der Durchgangsbohrung ein erstes zylindrisches Element gehalten ist, das auf der Metallfolie fest aufliegt. Der weitere Teil der Metallfolie wird von der Deckelfläche abgedeckt. Das erste zylindrische Element trägt mittig ein zweites zylindrisches Element, das einen kleineren Durchmesser hat wie der engere Teil der Durchgangsbohrung in der Deckelfläche, wobei um das zweite zylindrische Element herum eine Spiralfeder angeordnet ist. Die seitliche Wandung der Verschlußkappe ist über die Deckelfläche hinauskragend ausgebildet, so daß ein zylindrischer Innenraum gebildet ist, der oben durch eine oben auf dem umlaufenden Rand der seitlichen Wandung aufliegende Verschlußplatte abgedeckt ist. Die Verschlußplatte ist dabei fest mit der seitlichen Wandung verbunden, und zwar entweder ist sie mit dieser verschraubt oder verschweißt. In dem Innenraum ist das zylindrisch geformte Indikatorelement angeordnet, dessen Außendurchmesser dem Außendurchmesser einer Durchgangsbohrung in der Verschlußplatte entspricht, so daß das Indikatorelement im Anzeigefall aus der Verschlußplatte, zumindest teilweise, heraustreten kann. Die Öffnung in der Verschlußplatte ist zweistufig engerwerdend ausgebildet, wobei der Außendurchmesser des Indikatorelements dem engeren Teil der Durchgangsbohrung in der Verschlußplatte entspricht. Das Indikatorelement ist als topfartiger Hohlkörper ausgebildet und weist bevorzugterweise vier seitlich auskragende Sperrelemente auf, die elastisch an dem Indikatorelement befestigt sind und jeweils einen Anlageabschnitt aufweisen, der an einen Halteabschnitt in der Verschlußplatte anlegbar ist. Die Sperrelemente sind dabei elastisch verschwenkbar im Indikatorelement gehaltert. Das Indikatorelement ist jedoch hohlzylindrisch ausgebildet, und in das Indikatorelement kann das zweite zylindrische Element wie ein Kolben eingesteckt werden. In der Stellung, in der sich das zweite zylindrische Element bei ordnungsgemäß befüllter Druckflasche befindet, ist dieses soweit in das Indikatorelement eingeschoben, daß die Sperrelemente blockiert werden. Diese können dann nicht aus ihrer sperrenden und mit der Anlagefläche den Halteabschnitt in der Verschlußplatte hintergreifenden Stellung herausschwenken, so daß das Indikatorelement fest in der Verschlußplatte gehalten ist. Wenn jedoch der Druck abfällt und sich unter Einwirkung der Feder eine Verformung der Metallfolie ergibt, fährt das zweite zylindrische Element aus dem Indikatorelement heraus. In diesem Moment können die Sperrelemente sich nach innen in den Innenraum des Indikatorelements bewegen, und das Indikatorelement ist in der Verschlußplatte nicht mehr gehaltert. Unter Einwirkung der Spiralfeder wird das Indikatorelement durch die Durchgangsöffnung in der Verschlußplatte hindurchgeschoben und sozusagen ausgeworfen. Die Verschlußplatte zeigt dann lediglich noch ein Loch, so daß von außen sofort erkennbar ist, daß der Druck unter eine bestimmte vorgegebene Grenze gefallen ist.

Weitere vorteilhafte Ausgestaltungen sind in den Unteransprüchen gekennzeichnet

Nachstehend werden die Ausführungsbeispiele anhand von Zeichnungen näher erläutert. Es zeigen in rein schematischen Darstellungen
- **Fig. 1**: eine teilweise geschnittene Seitenansicht eine weitere Ausführungsform eines Indikators für Druckluftflaschen mit Indikatorplättchen,
- **Fig. 2**: eine teilweise geschnittene Seitenansicht einer weiteren Ausführungsform des Indikators für Druckluftflaschen mit einem Indikatorelement,
- **Fig. 3**: in einer vergrößerten Einzeldarstellung das Indikatorelement,
- **Fig. 4**: in einer verkleinerten Darstellung das Indikatorelement gemäß Fig. 3 von oben, und
- **Fig. 5**: in einer senkrechten Schnittdarstellung ein Detail der Fig. 2.

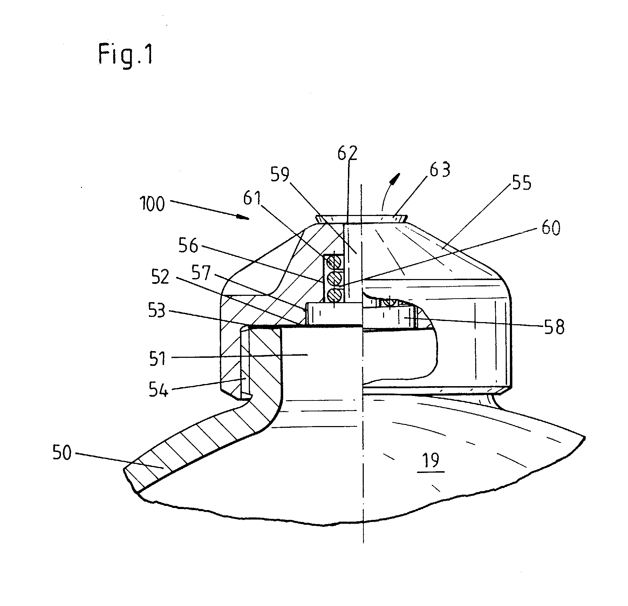

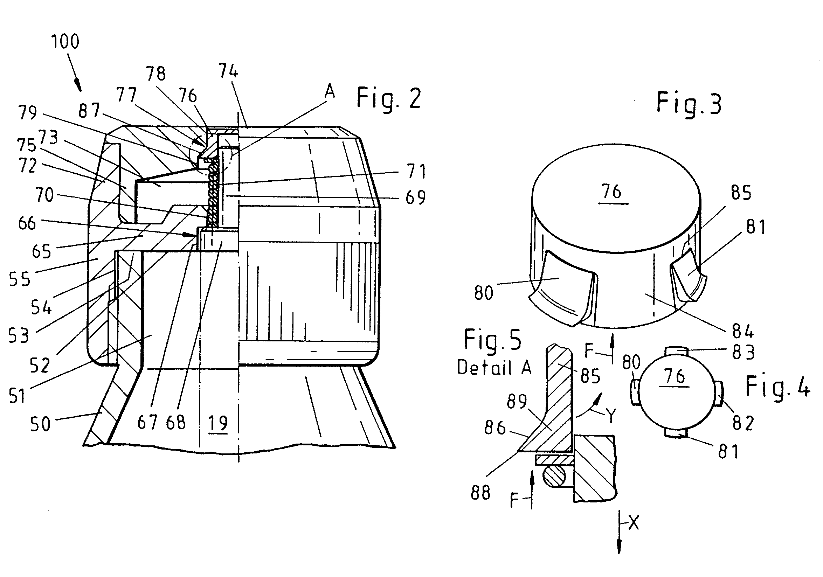

Die in Fig. 1 dargestellte Ausführungsform weist an der Druckluftflasche 50 eine Öffnung 51 auf, die mit einer Metallfolie 52 versehen ist, die mit dem oben umlaufenden Rand 53 der Gewindeöffnung 51 fest verbunden ist. Auf dem Gewinde 54 der Gewindeöffnung 51 ist eine verschlußkappe 55 aufgeschraubt. Diese Verschlußkappe 55 weist mittig eine von innen nach außen enger werdende zweistufige Durchgangsbohrung 56 auf. In der breitesten Stufe 57 der Durchgangsbohrung 56 ist ein zylindrisches Element 58 gelagert, das auf der Metallfolie 52 auf' liegt. Dieses zylindrische Element 58 weist mittig ein zweites zylindrisches Element 59 auf, das den gleichen Durchmesser hat wie der engste Teil der Durchgangsbohrung 56. Im mittigen Teil 60 der Durchgangsbohrung 56 liegt eine Spiralfeder 61, die das zweite zylindrische Element 59 umgibt und sich am zylindrischen Element 58 und der Verschlußkappe 55 abstützt. Im befüllten Zustand ist die Metallfolie 52 plan, so daß das zweite zylindrische Element 59 bündig mit der Verschlußkappe 55 abschließt. Auf der Kreisfläche 62 des zweiten Elements 59, die zylindrisch in der Durchgangsbohrung 56 sichtbar ist, ist ein Indikatorplättchen 63 aufgeklebt, das einen größeren Durchmesser aufweist als die Durchgangsbohrung 56. Im unbefüllten Zustand der Druckluftflasche 50 ist die Metallfolie 52 nach innen gewölbt, so daß sich die zylindrischen Elemente 58 und 59 in Richtung der Druckluftflasche 50, unter dem Einfluß der Spiralfeder 61, bewegt haben und das Indikatorplättchen 63 abgerissen ist. Die rechte Seite der Figur 2 gibt den ungefüllten und die linke Seite den befüllten Zustand wieder. In den Fig. 2-5 ist eine weitere Ausführungsform des Indikators dargestellt, die in ihrem Grundaufbau der Ausführungsform nach Fig. 1 ähnlich ist. Auch hierbei weist die Druckluftflasche 50 eine Öffnung 51 auf, die mit einer Metallfolie 52 fest verschlossen ist, die mit dem oben umlaufenden Rand 53 der flaschenhalsartigen Öffnung 51 fest verbunden ist. Auf das Außengewinde 54 der flaschenhalsartigen Öffnung 51 ist eine Verschlußkappe 55 aufgeschraubt. Die Metallfolie ist dabei so angeordnet, daß keinerlei Verbindung des Druckraums nach außen über die Öffnung 51 besteht, da die Metallfolie den flexiblen Teil der Wandung der Druckluftflasche 50 bildet. Die Verschlußkappe 55 weist eine die Öffnung 51 und damit die Metallfolie 52 übergreifende Deckelfläche 65 auf, in der mittig eine von innen nach außen zweistufig enger werdende Durchgangsbohrung 66 ausgebildet ist. In der unteren breiteren Stufe 67 der Durchgangsbohrung 66 ist ein erstes zylindrisches Element 68 gehalten, das auf der Metallfolie 52 fest aufliegt. Die Metallfolie wird dabei von dem ersten zylindrischen Element 68 und der Deckelfläche 65 vollständig abgedeckt und abgestützt. Das erste zylindrische Element 68 trägt mittig ein zweites zylindrisches Element 69. Dieses zweite zylindrische Element 69 weist einen kleineren Durchmesser auf wie die engere Stufe 70 der Durchgangsbohrung 66 in der Deckelfläche 65. Um das zweite zylindrische Element 69 herum ist eine Spiralfeder 71 angeordnet.

Die seitliche Wandung 72 der Verschlußkappe 55 ist über die Deckelfläche hinauskragend ausgebildet und umschließt einen zylindrischen oben offenen Innenraum 73.

Dieser ist durch eine oben auf den umlaufenden Rand der seitlichen Wandung 72 aufgelegte Verschlußplatte 74 abgedeckt, die fest mit der seitlichen Wandung 72 verbunden ist, indem sie mit einem nach unten auskragenden Abschnitt 75 mit der seitlichen Wandung 72 verschraubt ist. In dem Innenraum 73 ist ein Indikatorelement 76 angeordnet, das zylindrisch geformt ist. In der Verschlußplatte 74 ist eine zweistufig enger werdende Durchgangsöffnung 77 ausgebildet, wobei der Außendurchmesser des Indikatorelements 76 dem Innendurchmesser des engeren Teils 78 der Durchgangsöffnung 77 entspricht, während der untere zweite Teil 79 der Durchgangsbohrung einen größeren Innendurchmesser aufweist.

Das Indikatorelement 76 ist als topfartiger Hohlkörper ausgebildet und weist vier in der Seitenwand angeordnete Sperrelemente 80,81,82,83 auf. Diese sind durch in Längsrichtung des Indikatorelements verlaufende Einschnitte so von der Seitenwand 74 des Indikatorelements getrennt, daß sie nur noch über eine Verbindungslinie 85 mit dem Indikatorelement verbunden sind und daher elastisch an diesem angeordnet sind. Jedes Sperrelement weist dabei an seinem freien Ende eine Erweiterung auf, die außenseitig eine Anlagefläche 86 trägt. Der Übergang zwischen der ersten Stufe 78 und der zweiten Stufe 79 der Durchgangsbohrung 77 in der Verschlußplatte 74 ist als Schrägfläche 87 ausgebildet, die in ihrer Formgebung mit der Anlagefläche 86 jedes Sperrelements 80,81,82,83 korrespondiert. Der untere Rand 78 des Indikatorelements 76 ist auf der Spiralfeder 71 abgestützt, die sich wiederum auf dem ersten zylindrischen Element 68 abstützt. Die Spiralfeder 71 drückt daher von unten gegen das Indikatorelement 76, das die Durchgangsbohrung 77 in der Verschlußplatte 74 durchtreten würde, wenn nicht die Anlageflächen 86 der Sperrelemente 80,81,82,83 an der Schrägfläche 87 in der Verschlußplatte 74 anliegen würden und somit das Indikatorelement 76 zurückhalten würden. Die Sperrelemente 80,81,82,83 sind dabei bei gefüllter Druckluftflasche gehindert, nach innen zu verschwenken und das Indikatorelement 76 freizugeben, da das Indikatorelement 76 hohlzylindrisch ausgebildet ist und in das Indikatorelement das zweite zylindrische Element 69 wie ein Kolben eingesteckt ist. In der Stellung, in der sich das zweite zylindrische Element 69 bei ordnungsgemäß befüllter Druckluftflasche 50 befindet, ist das zweite zylindrische Element 69 soweit in das Indikatorelement 76 eingeschoben, daß die Sperrelemente 80,81,82,83 gegen eine Verschwenkung nach innen blockiert sind. Diese können dann nicht aus ihrer sperrenden und mit der Anlagefläche 86 den von der Schrägfläche 87 gebildeten Halterungsabschnitt in der Verschlußplatte 74 hintergreifenden Stellung herausschwenken, so daß das Indikatorelement 76 fest in der Verschlußplatte 74 gehalten wird.

Wenn jedoch aus irgendwelchen Gründen der Druck in der Druckflasche 50 abfällt und sich unter Einwirkung der Spiralfeder 71 eine Verformung der Metallfolie 52 zum Innenraum 19a hin ergibt, fährt das zweite zylindrische Element 68 aus dem Indikatorelement 76 in der in der Zeichnung mit X bezeichneten Richtung heraus. In diesem Moment können die Sperrelemente 80,81,82,83 sich nach innen in Y-Richtung in den Innenraum des Indikatorelementes 76 bewegen und das Indikatorelement 76 ist in der Verschlußplatte 74 nicht mehr gehaltert. Unter Einwirkung der Kraft F der Spiralfeder 71 wird das Indikatorelement 76 durch die Durchgangsöffnung 77 in der Verschlußplatte 74 hindurchgeschoben. Je nach Dimensionierung der Spiralfeder 71 ragt das Indikatorelement entweder hervor oder es wird ganz ausgeworfen. Es ist auf jeden Fall sofort von außen erkennbar, daß der Druck unter eine bestimmte vorgegebene Grenze gefallen ist.

## Patentansprüche

1. Indikator (100) an einer Druckluftflasche (50) od. dgl. zur Anzeige des Unterschreitens eines definierten Druckes in der Druckluftflasche (50), wobei mindestens ein bestimmter Teil (52) der Wandung der Druckluftflasche (50) derart ausgelegt ist, daß dieser flexibel ist, so daß dieser Teil der Wandung bei unterschiedlichen Drücken bestimmten unterschiedlichen Verformungen unterliegt, und ein Indikatorelement (63; 76) vorgesehen ist, das derart mit dem flexiblen Teil (52) der Wandung der Druckluftflasche (50) verbunden ist, daß es abhängig von der Verformung des flexiblen Teils (52) unterschiedliche Stellungen einnimmt,
dadurch gekennzeichnet,
daß die Druckluftflasche (50) eine flaschenhalsartige Öffnung (51) mit einem Außengewinde (54) aufweist, die mit einer Metallfolie (52) verschlossen ist, die mit dem oben umlaufenden Rand (53) der Öffnung (51) fest verbunden ist, wobei auf das Gewinde (54) der Gewindeöffnung (51) eine Verschlußkappe (55) aufgeschraubt ist, daß die Verschlußkappe (55) mittig eine von innen nach außen zweistufig enger werdende Durchgangsbohrung (56; 66) aufweist, wobei in der breitesten Stufe (57; 67) der Durchgangsbohrung (56; 66) ein erstes zylindrisches Element (58; 68) eingelegt ist, das auf der Metallfolie (52) aufliegt und mittig ein zweites zylindrisches Element (59; 69) aufweist, das den gleichen Durchmesser hat wie der engste Teil der Durchgangsbohrung (56; 66), wobei die Metallfolie (52), die den flexiblen Teil der Wandung der Druckluftflasche (50) bildet, in unbefülltem Zustand der Druckluftflasche (50) zum Innenraum (51) der Druckluftflasche (50) gewölbt ist, so daß das zweite zylindrische Element (59; 69) das Indikatorelement (63; 76) freigibt bzw. vom Indikatorelement (63; 76) getrennt wird.

2. Indikator nach Anspruch 1,
dadurch gekennzeichnet,
daß im mittigen Teil (60) der Durchgangsbohrung (56) eine Spiralfeder (61) eingelegt ist, die das zylindrische Element (59) umgibt und sich am zylindrischen Element (58) und der Verschlußkappe (55) abstützt und daß das zweite zylindrische Element (59) derart in seiner Länge bemessen ist, daß die aus der Durchgangsbohrung (56) sichtbare Kreisfläche (62) im unbefüllten Zustand der Druckluftflasche (50) bündig mit der Verschlußkappe (55) abschließt, wobei auf die Kreisfläche (62) als Indikatorelement ein Indikatorplättchen (63) aufgeklebt ist, das einen größeren Durchmesser aufweist als die Durchgangsbohrung (56).

3. Indikator nach Anspruch 1,
dadurch gekennzeichnet,
daß die seitliche Wandung (72) der Verschlußkappe (55) über die die Durchgangsbohrung (66) aufweisende Deckelfläche (65) hinauskragend ausgebildet ist, so daß ein Innenraum (73) gebildet ist, der durch eine Verschlußplatte (74) abgedeckt ist, die fest mit der seitlichen Wandung (72) der Verschlußkappe (55) verbunden ist und die eine mittige Durchgangsbohrung (77) aufweist, wobei in den Innenraum (73) ein zylindrisch geformtes Indikatorelement (76) eingesetzt ist, dessen Außendurchmesser dem der Durchgangsbohrung (77) in der Verschlußplatte (74) entspricht und das mindestens einseitig auskragende Sperrelement (80,81,82,83) aufweist, das elastisch an dem Indikatorelement befestigt und eine einen Halteabschnitt (87) der Verschlußplatte (74) hintergreifende Anlagefläche (86) aufweist und in eine Freigabestellung verschwenkbar angeordnet ist, wobei jedes Sperrelement (80,81,82,83) durch das zweite zylindrische Element (69) in seiner das Indikatorelement (76) halternden Stellung blockierbar ist, und daß sich zwischen dem ersten zylindrischen Element (68) und dem Indikatorelement (76) eine Spiralfeder (71) befindet, durch die ständig Druck auf das Indikatorelement (76) ausgeübt wird, das jedoch durch das oder die Sperrelemente (80,81,82,83) bei befüllter Druckluftflasche gehalten wird.

4. Indikator nach Anspruch 2 oder 3,
dadurch gekennzeichnet,
daß die Durchgangsbohrung (77) in der Verschlußplatte (74) zweistufig enger werdend ausgebildet ist, daß der Außendurchmesser des Indikatorelementes (76) dem engeren Teil (78) der Durchgangsbohrung (77) in der Verschlußplatte (74) entspricht und daß der Übergang zwischen dem weiteren Teil (79) der Durchgangsbohrung (77) und dem engeren Teil (78) der Durchgangsbohrung (77) als Schrägfläche (87) ausgebildet den Halteabschnitt bildet, auf dem sich die Anlagefläche (86) jedes Sperrelementes (80,81,82,83) in seiner das Indikatorelement (76) halternden Stellung abstützt.

5. Indikator nach einem der Ansprüche 2 bis 4,
dadurch gekennzeichnet,
daß vier Sperrelemente (80,81,82,83) vorgesehen sind, die symmetrisch an dem Indikatorelement angeordnet sind, von denen jedes als einen Abschnitt der Außenwandung (84) des hohlzylindrischen Indikatorelementes (76) bildender, aus der Wandungsebene verschwenkbarer Sperrkörper mit einem an einer freien Endkante (88) angeordnetem Anlageteil (89) mit der Anlagefläche (86) ausgebildet ist.

## Claims

1. Indicator (100) on a compressed air cylinder (50) or suchlike for indicating the falling below of a defined pressure in the compressed air cylinder (50), in which case at least a certain portion (52) of the wall of the compressed air cylinder (50) is constructed in such a way that the same is flexible so that this portion of the wall, at varying pressures, is subject to different deformations, and an indicator element (63;76) is provided, which is connected to the flexible portion (52) of the wall of the compressed air cylinder (50) in such a manner that the same, in dependence of the deformation of the flexible portion (52), assumes different positions,
characterized in that
the compressed air cylinder (50) possesses a bottleneck-like aperture (51) with an external thread (54), which is sealed with a metal foil (52) that is rigidly connected with the upper circumferential edge (53) of the aperture (51), while a sealing cap (55) is screwed on to the thread (54) of the threaded aperture (51), in that the sealing cap (55) is centrically provided with a through bore (56;66) which narrows down from the inside towards the outside in two stages, while, in the widest stage (57;67) of the through bore (56;66), a first cylindrical element (58;68) is fitted which rests upon the metal foil (52) and is, in its centre, provided with a second cylindrical element (59;69), which possesses the same diameter as the narrowest portion of the through bore (56;66), in which case the metal foil (52), which constitutes the flexible wall portion of the compressed air cylinder (50), in the unfilled state of the compressed air cylinder (50), is curved in the direction of the interior (51) of the compressed air cylinder (50) so that the second cylindrical element (59;69) releases the indicator element (63;76) or is separated from the indicator element (63;76).

2. Indicator according to Claim 1,
characterized in that,
in the centrical part (60) of the through bore (56), a spiral spring (61) is fitted which encloses the cylindrical element (59) and which is supported on the cylindrical element (58) and the sealing cap (55) and in that the second cylindrical element (59) is dimensioned in its length in such a way that the circular area (62) visible from the through bore (56), in the unfilled state of the compressed air cylinder (50), terminates flush with the sealing cap (55), while, on to the circular area (62), in the form of an indicator element, a small indicator plate (63) is adhesively affixed which possesses a larger diameter than the through bore (56).

3. Indicator according to Claim 1,
characterized in that
the lateral wall (72) of the sealing cap (55) is constructed so as to project above the cover area (65) provided with the through bore (66) so that an internal space (73) is formed which is covered by a closing plate (74), which is rigidly connected to the lateral wall (72) of the sealing cap (55) and which possesses a centrical through bore (77), while, into the internal space (73), a cylindrically configured indicator element (76) is inserted, the external diameter of which corresponds to that of the through bore (77) in the closing plate (74) and which possesses at least one unilaterally projecting locking element (80,81,82,83) which is elastically secured to the indicator element and presses a contact area (86) gripping behind a retaining section (87) of the closing plate (74) and is disposed so as to be swivellable into a release position, each locking element (80,81,82,83) being blockable by the second cylindrical element (69) in its position wherein it mountingly secures the second cylindrical element (76) and in that, between the first cylindrical element (68) and the indicator element (76), a spiral spring (71) is located, with the aid of which constant pressure is exerted upon the indicator element (76), which, however, is held in position by the locking element or elements (80,81, 82,83) when the c ompresssed air cylinder is filled.

4. Indicator according to either Claim 2 or 3,
characterized in that
the through bore (77) in the closing plate (74) is constructed so as to become narrower un two stages, in that the external diameter of the indicator element (76) corresponds to the narrower portion (78) of the through bore (77) in the closing plate (74) and in that the transitional region between the wider part (79) of the through bore (77) and the narrower portion (78) of the through bore (77) constructed in the form of an oblique area (87) constitutes the retaining section upon which the contact area (86) of each locking element (80,81,82,83) is supported in its position wherein it secures the indicator element (76).

5. Indicator according to any of Claims 2 to 4,
characterized in that
four locking elements (80,81,82,83) are provided which are swivellably arranged on the indicator element, each of which is constructed so as to form a locking member swivellable from the wall plane forming a section of the outer wall (84) of the hollow cylindrical indicator element (76), with a bearing portion (89) disposed on a free terminal edge (88) with the contact area (86).

## Revendications

1. Indicateur (100) sur une bouteille d'air comprimé (50) ou équivalent pour l'indication qu'une pression définie n'est pas atteinte dans la bouteille d'air comprimé (50), au moins une certaine partie (52) de la paroi de la bouteille d'air comprimé (50) étant conçue de manière à être flexible si bien que cette partie de la paroi est soumise, à différentes pressions, à certaines déformations différentes, et un élément indicateur (63 ; 76) étant prévu qui est relié à la partie flexible (52) de la paroi de la bouteille d'air comprimé (50) de telle manière à prendre différentes positions en fonction de la déformation de la partie flexible (52),
caractérisé en ce
que la bouteille d'air comprimé (50) présente une ouverture du type col de bouteille (51) avec un filet extérieur (54), qui est fermée par une feuille de métal (52) qui est reliée de manière fixe au bord périphérique en haut (53) de l'ouverture (51), un capuchon de fermeture (55) étant vissé sur le filet (54) de l'ouverture filetée (51), que le capuchon de fermeture (55) présente au milieu une forure de passage (56 ; 66) qui devient plus étroite de l'intérieur vers l'extérieur en deux degrés, un premier élément cylindrique (58 ; 68) étant mis en place dans le degré le plus large (57 ; 67) de la forure de passage (56 ; 66), élément qui repose sur la feuille de métal (52) et qui présente au milieu un second élément cylindrique (59 ; 69) qui a le même diamètre que la partie la plus étroite de la forure de passage (56 ; 66), la feuille de métal (52), qui forme la partie flexible de la paroi de la bouteille d'air comprimé (50), étant voûtée vers l'espace intérieur (51) de la bouteille d'air comprimé (50), la bouteille d'air comprimé (50) étant à l'état non rempli, si bien que le second élément cylindrique (59 ; 69) libère l'élément indicateur (63 ; 76) ou est séparé de l'élément indicateur (63 ; 76).

2. Indicateur selon la revendication 1,
caractérisé en ce
qu'un ressort spiral (61) est mis en place dans la partie centrale (60) de la forure de passage (56), ressort qui entoure l'élément cylindrique (59) et s'appuie sur l'élément cylindrique (58) et le capuchon de fermeture (55) et que le second élément cylindrique (59) est dimensionné quant à sa longueur de telle manière que la surface circulaire (62), visible à partir de la forure de passage (56), est fermée de niveau avec le capuchon de fermeture (55), la bouteille d'air comprimé (50) étant à l'état non rempli, une pastille d'indicateur (63) étant collée sur la surface circulaire (62) comme élément indicateur, pastille qui présente un plus grand diamètre que la forure de passage (56).

3. Indicateur selon la revendication 1,
caractérisé en ce
que la paroi latérale (72) du capuchon de fermeture (55) est configurée en faisant saillie au-delà de la surface de couvercle (65) présentant la forure de passage (66) si bien qu'il est formé un espace intérieur (63) qui est recouvert par une plaque de fermeture (64) qui est reliée de manière fixe à la paroi latérale (72) du capuchon de fermeture (55) et qui présente une forure de passage (77) centrale, un élément indicateur formé cylindriquement (76) étant mis en place dans l'espace intérieur (73), élément indicateur dont le diamètre extérieur correspond à celui de la forure de passage (77) dans la plaque de fermeture (74) et qui présente l'élément d'arrêt (80, 81, 82, 83), qui fait saillie au moins d'un côté, qui est fixé élastiquement à l'élément indicateur et qui présente une surface d'appui (86) qui saisit par derrière une section de maintien (87) de la plaque de fermeture (74) et qui est placé pivotant dans une position de dégagement, chaque élément d'arrêt (80, 81, 82, 83) pouvant être bloqué par le second élément cylindrique (69) dans sa position qui maintient l'élément indicateur (76) et qu'un ressort spiral (71) se trouve entre le premier élément cylindrique (68) et l'élément indicateur (76), ressort grâce auquel une pression est exercée constamment sur l'élément indicateur (76) qui est cependant maintenu par le ou les éléments d'arrêt (80, 81, 82, 83), la bouteille d'air comprimé étant remplie.

4. Indicateur selon la revendication 2 ou 3,
caractérisé en ce
que la forure de passage (77) dans la plaque de fermeture (74) est configurée en se rétrécissant en deux degrés, que le diamètre extérieur de l'élément indicateur (76) correspond à la partie plus étroite (78) de la forure de passage (77) dans la plaque de fermeture (74) et que la transition entre la partie plus large (79) de la forure de passage (77) et la partie plus étroite (78) de la forure de passage (77) forme la section de maintien en étant configurée comme une surface inclinée (87), section de maintien sur laquelle la surface d'appui (86) de chaque élément d'arrêt (80, 81, 82, 83) s'appuie dans sa position qui maintient l'élément indicateur (76).

5. Indicateur selon l'une des revendications 2 à 4,
caractérisé en ce
que quatre éléments d'arrêt (80, 81, 82, 83) sont prévus qui sont placés symétriquement sur l'élément indicateur, éléments parmi lesquels chacun est configuré comme un corps d'arrêt formant une section de la paroi extérieure (84) de l'élément indicateur (76) cylindrique creux, qui est pivotant à partir du plan de la paroi, avec une partie d'appui (89) avec la surface d'appui (86), partie d'appui placée sur une arête d'extrémité libre (88).
